Europäisches Patentamt

European Patent Office

Office européen des brevets

(11) Numéro de publication: **0 096 604
B1**

## (12) FASCICULE DE BREVET EUROPEEN

(45) Date de publication du fascicule du brevet:
19.03.86

(21) Numéro de dépôt: **83400972.2**

(22) Date de dépôt: **13.05.83**

(51) Int. Cl.⁴: **B 60 K 15/04,** B 65 D 51/00

(54) Trappe de remplissage, notamment pour véhicules automobiles.

(30) Priorité: **25.05.82 FR 8209316**

(43) Date de publication de la demande:
**21.12.83 Bulletin 83/51**

(45) Mention de la délivrance du brevet:
**19.03.86 Bulletin 86/12**

(84) Etats contractants désignés:
**DE GB IT**

(56) Documents cités:
**US - A - 2 682 968**
**US - A - 3 996 966**

(73) Titulaire: **AUTOMOBILES CITROEN, 62 Boulevard
Victor-Hugo, F-92200 Neuilly-sur-Seine (FR)**
Titulaire: **AUTOMOBILES PEUGEOT, 75, avenue de la
Grande Armée, F-75116 Paris (FR)**

(72) Inventeur: **Blion, Didier, 4, Square Eblé Résidence
Breteuil, F-78150 Le Chesnay (FR)**

(74) Mandataire: **Boivin, Claude, 9, rue Edouard-Charton,
F-78000 Versailles (FR)**

LIBER, STOCKHOLM 1986

## Description

La présente invention concerne une trappe de remplissage, verrouillable notamment pour réservoirs de véhicules automobiles, qui comporte un volet articulé accouplé à un bouchon obturateur telle que décrite dans le document US-A-2682968.

Les trappes de remplissage de véhicules automobiles, qui protègent l'accès à la tubulure de remplissage, sont fréquemment l'objet de tentatives d'effraction. Comme dans les trappes actuellement réalisées, le volet fait corps avec le bouchon, ces tentatives entraînent une détérioration de ce volet, même si elles sont infructueuses.

La présente invention a pour objet une trappe de remplissage perfectionnée de manière à remédier à cet inconvénient.

La trappe de remplissage selon l'invention est caractérisée en ce que le bouchon obturateur est verrouilleble et l'accouplement du volet et du bouchon est réalisé de manière à céder lorsqu'un effort exercé sur le volet atteint un certain seuil.

Dans ces conditions, toute détérioration du volet, lors d'une tentative d'effraction, est évitée. La présence du bouchon intact et encore verrouille, après l'ouverture du volet, a un effet dissuasif- Enfin, l'effraction du bouchon séparé du volet qui exerçait sur lui un effet de levier, est beaucoup plus difficile.

Dans un mode de réalisation avantageux de l'invention, le volet est solidaire d'au moins deux languettes flexibles qui sont dirigées vers l'intérieur de la trappe et dont les extrémités comportent des becquets de retenue pouvant s'encliqueter sur le bouchon.

On a décrit ci-après, à titre d'exemple non limitatif, un mode de réalisation de la trappe selon l'invention, avec référence au dessin annexé dans lequel:

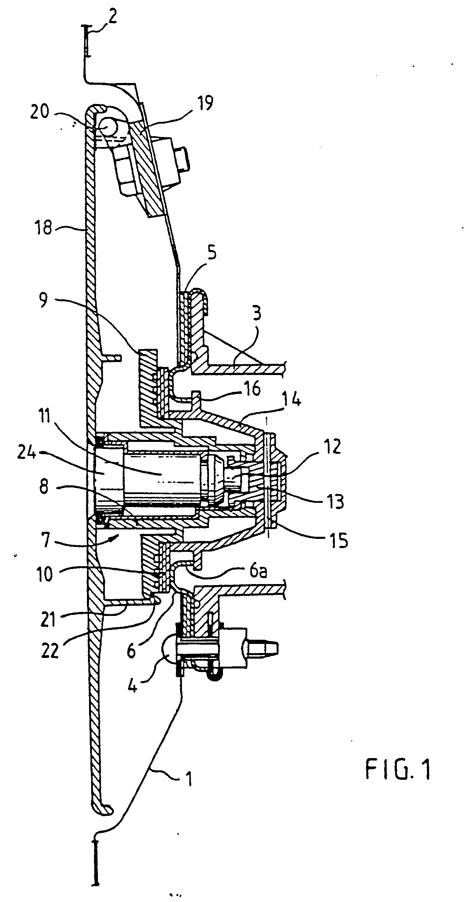

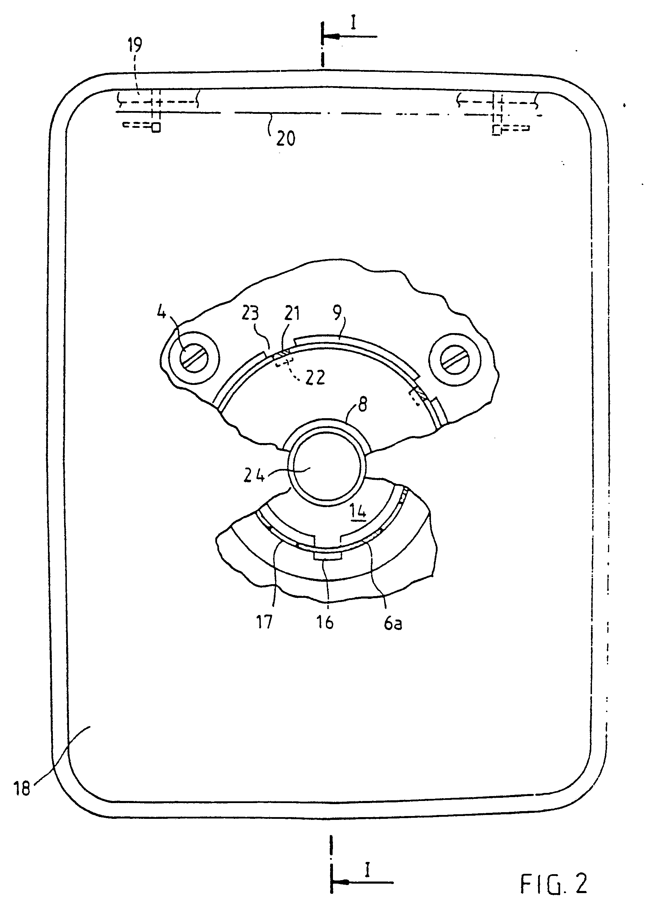

La Figure 1 est une coupe de la trappe suivant I-I de la Figure 2;

La Figure 2 en est une vue en plan avec arrachements partiels.

Au dessin, on voit une trappe de remplissage comportant un cuvelage 1 intégré dans la carrosserie 2. La tubulure de remplissage 3 est fixée par des bouchons 4 au cuvelage 1, autour d'un orifice prevu dans le fond de ce cuvelage, avec interposition d'un joint d'étanchéité 5 et d'une embase annulaire d'appui 6.

L'ouverture de l'embase 6 peut être obturée par un bouchon 7 comprenant un fût central 8 solidaire d'une collerette périphérique 9 qui peut prendre appui sur.l'embase 6 avec interposition d'un joint d'étanchéité 10. A l'intérieur du fût 8 est disposé un barillet de verrouillage 11 dont l'élément mobile 12 est solidaire d'une douille d'entraînement 13 partiellement disposée à l'intérieur du fût 8. Cette douille est engagée dans une tourelle coiffante 14 et est solidarisée avec celle-ci par une goupille 15. La tourelle 14 comporte, à sa périphérie, des tenons 16 qui peuvent traverser des encoches 17 prévues dans l'embase 6 et s'engager sous un col rabattu 6a de cette embase.

Un volet 18 est relié au cuvelage 1 par une charnière 19 dont l'axe est représenté en 20. Le volet 18 porte une série de languettes flexibles 21 qui sont dirigées vers l'intérieur, perpendiculairement au plan du volet; l'extrémité de chacune de ces languettes constitue un becquet de retenue 22 dirigé radialement vers l'intérieur et pouvant s'encliqueter derrière une saillie prévue sur le bord périphérique du fond d'encoches 23 qui sont ménagées dans la collerette 9 et dans lesquelles les languettes sont engagées. Les languettes peuvent faire corps avec le volet ou être rapportées.

Le volet 18 comporte en son centre un trou 24, au droit du barillet 11, permattant l'introduction dans ce dernier d'un moyen de commande constitué par exemple par une clé.

En temps normal, le volet est attelé au bouchon 7. Après remplissage du réservoir, l'ensemble est rabattu dans le cuvelage et verrouillé de la manière usuelle. A l'aide de la clé introduite dans le barillet 11 par l'ouverture 24, on fait tourner l'élément 12 du verrou qui entraîne la tourelle 14. Les tenons 16 de cette tourelle qui se sont engagés dans les encoches 17, viennent prendre appui sous le col rabattu 6a de l'embase 6, en comprimant le joint 10, ce qui assure l'étanchéite.

Si la trappe de remplissage étant verrouillée, on exerce un effort sur le volet 18 pour ouvrir la trappe, le volet se désolidarise du bouchon 7 qui reste maintenu en position de fermeture sur la collerette 6. Ni le volet, ni le bouchon ne sont détériorés.

On notera que la forme coiffante et très enveloppante de la tourelle 14 permet d'obtenir une très grande compacité axiale. On peut par suite, prévoir un cuvelage 1 très plat réalisé par embouti direct sur le carénage, ce qui évite d'avoir à réaliser et à fixer un élément rapporté.

## Revendications.

1. Trappe de remplissage verrouillable, notamment pour réservoirs de véhicules automobiles, qui comporte un volet articulé (18) accouplé à un bouchon obturateur (7), caractérisée en ce que le bouchon obturateur est verrouillable et l'accouplement du volet (18) et du bouchon (7) est réalisé de manière à céder lorsqu'un effort exercé sur le volet atteint un certain seuil.

2. Trappe selon la revendication 1, caractérisée en ce que le volet (18) est solidaire d'au moins deux languettes flexibles (21) qui sont dirigées vers l'intérieur de la trappe et dont les extrémités comportent des becquets de retenue (22) pouvant s'encliqueter sur le bouchon (7).

3. Trappe selon la revendication 2, caractérisée en ce que les languettes (21) sont sensiblement perpendiculaires au plan du volet (18).

4. Trappe selon la revendication 2 ou 3, caractérisée en ce que les becquets (22) des languettes s'engagent sous une collerette périphérique (9) du bouchon (7).

5. Trappe selon la revendication 4, caractérisée en ce que les languettes (21) s'engagent à l'intérieur d'encoches (23) ménagées dans la collerette périphérique (9) du bouchon (7).

6. Trappe selon l'une des revendications 2 à 5, caractérisée en ce que les becquets (22) sont dirigés radialement vers l'intérieur.

## Claims

1. A lockable filling trap more especially for motor vehicle reservoirs which comprises a hinged flap (18) coupled to a closure cap (7), characterized in that the closure cap is lockable and coupling of the flap (18) and of the cap (7) is adapted so as to yield when a force exerted on the flap reaches a certain threshold.

2. The trap according to claim 1, characterized in that the flap (18) is integrally formed with at least two flexible tongues (21) which are directed inwardly of the trap and whose ends comprise retaining catches (22) able to snap fit onto the cap (7).

3. Trap according to claim 2, characterized in that the tongues (21) are substantially perpendicular to the plane of the flap (18).

4. Trap according to claim 2 or 3, characterized in that the catches (22) of the tongue engage under a peripheral collar (9) of the cap (7).

5. Trap according to claim 4, characterized in that the tongues (21) engage inside notches (23) formed in the peripheral coller (9) of the cap (7).

6. Trap according to one of claims 2 to 5, characterized in that the catches (22) are directed radially inwardly.

## Patentansprüche

1. Verriegelbare Einfüllstutzen-Verschlußklappe, insbesondere für Kraftfahrzeugtanks, mit einer schwenkbaren Abdeckklappe (18), die an einem Verschlußstopfen (7) angekoppelt ist, dadurch gekennzeichnet, daß der Verschlußstopfen verriegelbar ist und die Ankopplung der Abdeckklappe (18) an den Verschlußstopfen (7) derart ausgebildet ist, daß sie nachgibt, sobald eine auf die Abdeckklappe ausgeübte Kraft eine gewisse Schwelle erreicht.

2. Verschlußklappe nach Anspruch 1, dadurch gekennzeichnet, daß die Abdeckklappe (18) kraftschlüssig mit mindestens zwei flexiblen Zungen (21) verbunden ist, die in das Innere der Verschlußklappe gerichtet sind und deren Enden Halteansätze (22) aufweisen, die am Stopfen (7) einrasten können.

3. Verschlußklappe nach Anspruch 2, dadurch gekennzeichnet, daß die Zungen (21) im wesentlichen senkrecht zur Ebene der Abdeckklappe (18) stehen.

4. Verschlußklappe nach Anspruch 2 oder 3, dadurch gekennzeichnet, daß die Halteansätze (22) der Zungen unter einen Randkragen (8) des Stopfens (7) eingreifen.

5. Verschlußklappe nach Anspruch 4, dadurch gekennzeichnet, daß die Zungen (21) in das Innere von im Randkragen (9) des Stopfens (7) angeordneten Aussparungen (23) eingreifen.

6. Verschlußklappe nach einem der Ansprüche 2 bis 5, dadurch gekennzeichnet, daß die Halteansätze (22) radial nach innen gerichtet sind.

FIG.1

FIG. 2